Europäisches Patentamt

European Patent Office

Office européen des brevets

(11) Publication number: **0 114 508**
**B1**

(12) **EUROPEAN PATENT SPECIFICATION**

(45) Date of publication of patent specification: **25.11.87**

(21) Application number: **83307859.5**

(22) Date of filing: **22.12.83**

(51) Int. Cl.⁴: **G 11 B 27/00,** G 11 B 21/10,
G 11 B 7/08

(54) Record disc reproducing apparatus.

(30) Priority: **27.12.82 JP 234035/82**
**27.12.82 JP 234038/82**

(43) Date of publication of application:
**01.08.84 Bulletin 84/31**

(45) Publication of the grant of the patent:
**25.11.87 Bulletin 87/48**

(84) Designated Contracting States:
**DE GB NL**

(56) References cited:
**EP-A-0 007 199**
**EP-A-0 078 060**
**EP-A-0 092 169**
**DE-A-2 718 092**
**FR-A-2 522 858**
**GB-A-2 056 118**
**US-A-4 199 820**

(73) Proprietor: **Kabushiki Kaisha Toshiba**
**72, Horikawa-cho Saiwai-ku**
**Kawasaki-shi Kanagawa-ken 210 (JP)**

(72) Inventor: **Katayama, Yoshitaka c/o Patent**
**Division**
**Tokyo Shibaura Denki K. K. 72, Horikawa-cho**
**Saiwai-ku Kawasaki-shi Kanagawa-ken (JP)**
Inventor: **Nabeshima, Daiki c/o Patent Division**
**Tokyo Shibaura Denki K. K. 72, Horikawa-cho**
**Saiwai-ku Kawasaki-shi Kanagawa-ken (JP)**
Inventor: **Nakamura, Shinichi c/o Patent**
**Division**
**Tokyo Shibaura Denki K. K. 72, Horikawa-cho**
**Saiwai-ku Kawasaki-shi Kanagawa-ken (JP)**

(74) Representative: **Newstead, Michael John et al**
**Haseltine Lake & Co. 28 Southampton Buildings**
**Chancery Lane**
**London, WC2A 1AT (GB)**

Courier Press, Leamington Spa, England.

## Description

This invention relates to a record disc reproducing apparatus.

As prior art there can be mentioned British Patent Specification No. 2 056 118.A, disclosing an apparatus according to the preamble of claim 1; and US Patent Specification 4199820 disclosing the use of jumps of a mirror by one or n tracks.

There have recently been provided digital record discs for recording data signals such as audio signals or image signals and record disc reproducing apparatus for reproducing the recorded data. The digital record disc of such a type is so arranged that digital data intended for high density recording is recorded in the form of a spiral bit string on one side thereof and reproduced through reading the bit string by means of an optical pick-up using laser beams. Moreover, the record disc reproducing apparatus is used to read the recorded data by making the optical pick-up follow the recorded bit string by a tracking control system and to process the read-out signal in a predetermined manner so as to convert the signal into the original analogue form signal before recording, for example as an audio or video output signal.

As is well known, digital data accompanied by address data indicating the address of the digital data is written in the program area of the digital record disc. For instance, in a CD (compact disc) type digital record disc (hereinafter called simply a disc), digital data as audio signals in a digital form and their digital data track numbers indexes and addresses, and address data indicating absolute time after the reproduction of the disc is started, are recorded.

A record disc reproducing apparatus for the CD type disc is provided with a high speed pick-up carrying function performing fast-forwarding or fast-reversing of the pick-up to reproduce desired digital data readily and selectively, and an address search function performing the automatic search for the desired address data within the enormous amount of the data on the disc.

The above described high speed pick-up carrying function works so that, when it detects that the fast-forward or fast-reverse operation button or key has been operated, the pick-up is correspondingly moved in the positive or opposite radial direction of the disc at high speed by, for instance, a pick-up carriage motor. Then, the high speed pick-up carrying function is performed when the search operation button or key has been operated in company with the designation or presetting of the desired address of the program recorded on the disc, the high speed pick-up function being automatically carried out until the desired address is attained.

On the other hand, to ensure that the search function can be quickly made only by designating the track number and the index on the disc, Table of Contents data (hereinafter called TOC data) indicating the digital data on the starting addresses (that is, absolute time) of the digital data to which each of the track numbers is allotted is recorded in the lead-in area thereof. In other words, the record disc reproducing apparatus is so arranged that it stores the TOC data in the lead-in area and that it makes the search function by automatically referring to the starting address corresponding to the track number designated. As a result, the digital data can readily be reproduced with ease.

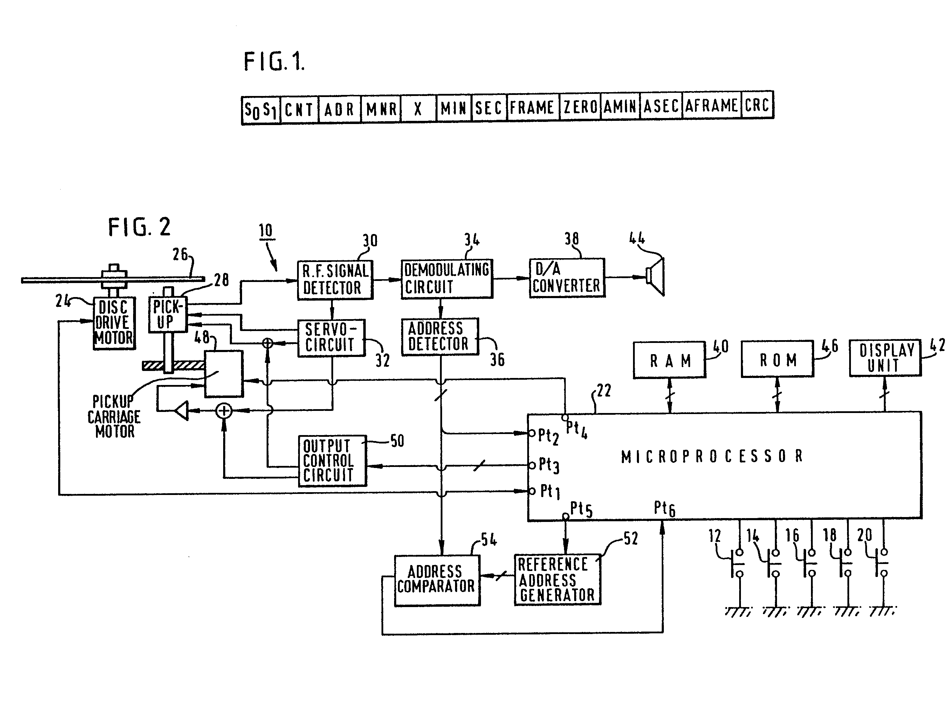

As for digital data recorded on the CD type disc, the prescribed number of frames constitutes one data block, and are accompanied by the prescribed units of subcodes in addition to the data converted from audio signals in the form of PCM (pulse code modulation). Among them, a subcode Q is an address data and the like for the recorded data and has a format shown in Fig. 1.

One unit of the subcode Q reproduced in the program area is, as shown, formed with the data reproduced in the order of the following items:

(1) $S_0$, $S_1$: 2 bits synchronous pattern data section indicating the start of the subcode Q;

(2) CNT: 4 bits control data section distinguishing between a channel program and a four channel program, and indicating a presence or an absence of pre-emphasis and a permission or a prohibition of copying;

         0 0 x 0: 2 ch., emphasis OFF
         1 0 x 0: 4 ch., emphasis ON
         0 0 x 1: 2 ch., emphasis OFF
         1 0 x 1: 4 ch., emphasis ON
         x x 0 x: prohibition of copying
         x x 1 x: permission of copying

(3) ADR: 4 bit mode data section indicating the data mode of the subcode Q;

         Mode 1 (BCD 1): Address Mode
         Mode 2 (BCD 2): Disc Catalogue Number Mode
         Mode 3 (BCD 3): Special Information Mode

(4) NMR: 8 bits (2 figures in BCD) program number index data section;

(5) X: 8 bits sub-index data section of the program;

(6) MIN: 8 bits first "minutes" data section indicating to the order of "minutes" within the time elapsed since the reproduction of the prescribed program number was commenced (hereinafter referred as relative time);

(7) SEC: 8 bits first "seconds" data section indicating to the order of "seconds" within the relative time;

(8) FRAME: 8 bits first decimal place of the "seconds" data section indicating to the order of a decimal of a "second", dividing one "second" with a prescribed digit number, e.g. 75, within the relative time;

2

(9) ZERO: Section composed of 8 bits digital 0;

(10) AMIN: 8 bits second "minutes" data section indicating to the order of "minutes" within the time elapsed since the reproduction was started from the lead-in area (hereinafter referred as absolute time), which represents the location or the address of the prescribed data;

(11) ASEC: 8 bits second "seconds" data section indicating to the order of "seconds" within the absolute time;

(12) AFRAME: 8 bits second decimal place of the "seconds" data section indicating to the order of a decimal place of a "second", dividing one "second" with the prescribed digit number, e.g. 75, within the absolute time; and

(13) CRC: 16 bits error .check code data section for the subcode Q.

The subcode Q formed with the above format is extracted by record disc reproducing apparatus and not only the state in which each piece of data of, for instance, (MNR), (X), (MIN), (SEC) is being reproduced but also the state in which the pick-up is being fast moved are displayed by the display unit of the record disc reproducing apparatus, so that the desired address can readily be attained.

In order to cause the search function to be made as quickly as possible, what should be done is move the pick-up quicker than the cases of fast-forward or fast-reverse operation function in the radial direction of the disc. However, the address data on the disc becomes unreadable during the high speed pick-up carrying function and the search function cannot be carried out.

Thus, a record disc reproducing apparatus capable of making a search at a higher speed is so constructed that address data is made to stop for a prescribed period of time during which the data is readable after a pick-up is moved by a prescribed distance at a speed higher than the cases of fast-forward or fast-reverse operation function and this operation is repeated until the desired address is attained.

With the above arrangement, because an address of a track wherein the pick-up is located is read out each time the pick-up is moved thereon at high speed during the search, the addresses are unnecessarily wasted when an address to be attained is largely separated from the address of the track corresponding to the position of the pick-up (hereinafter referred as the reproduction address).

Moreover, when dust or a crack on the disc makes the address data unreadable, the record disc reproducing apparatus keeps attempting to read an address data until the address data is read out. The problem is that extra time is required before the completion of the search.

An object of the present invention is to provide record disc reproducing apparatus with improved operability by making it make a search at a desired high speed.

According to the present invention there is provided record disc reproducing apparatus for use in reproducing data stored on the disc, comprising:—

a) a pick-up for reading data and the address (Ap) of such data from said disc;

b) means for moving said pick-up in a radial direction with respect to said disc; and

c) processing means arranged for: comparing the address (Ap) of data read from said disc with the address (As) stored in memory means of preselected data on said disc; and generating drive signals which cause the pick-up to be positioned substantially at the address of said preselected data as a result of an oscillating movement with decreasing amplitudes, characterised in that the processing means provides data representative of a nominal distance value for the distance between the address Ap read initially from said disc and the address As; in a first step replaces the current value of D by a replacement value of $D \cdot n$, where $n < 1$; and, in a second step, uses the replacement value to produce a pulse (KPa or KPb) having parameters dependent on the replacement value and which of Ap and As is larger, the pulse being applied to the pick-up moving means to cause the pick-up to move by the replacement value in a direction dependent on which of Ap and As is larger, the processing means repeating said first and second steps until $(Ap - As) < A$, where A is a prescribed value.

The said nominal distance value (D) could be about the distance between the address Ap read initially from said disc and the address As or about a radial breadth of a program area of the disc.

The present invention will now be described, by way of example, with reference to the accompanying drawings, in which:—

Fig. 1 is a diagram illustrating the format of a subcode Q recorded on a disc;

Fig. 2 is a circuit block diagram illustrating an embodiment of a record disc reproducing apparatus;

Fig. 3 is a diagram showing kick pulses for use in moving a pick-up;

Fig. 4 is a flowchart illustrating the operation of such a record disc reproducing apparatus; and

Fig. 5 is a diagram illustrating a search made by an embodiment of apparatus according to the present invention.

Referring first to Fig. 2, a record disc reproducing apparatus includes a record disc reproducing system 10 which is so controlled as to establish a prescribed operation mode by operating switches 12, 14, 16, 18 and 20 as operation keys for playback operation, stop operation, fast-forward operation, fast-reverse operation and search operation respectively through a microprocessor 22 connected thereto through an interface circuit (not shown).

In other words, when the microprocessor 22 in the record disc reproducing system 10 operates to drive a disc drive motor 24 connected to an output port $Pt_1$ thereof, digital data stored on a disc 26 is reproduced as an RF signal by a pick-up 28. The reproduced RF signal is sent to an RF signal detection circuit 30. The RF signal detection circuit 30 separates a pick-up servo signal to be supplied to a servo-circuit 32 from another

3

to be supplied to a demodulating circuit 34. The servo-circuit 32 sends various signals to the pick-up 28 for servo controlling purposes, including focussing and tracking control.

The demodulating circuit 34 separates an address signal component for detecting the address data from the reproduced RF signal and supplies an address signal component to an address detector 36, whereas the demodulating circuit 34 generates a demodulated signal (EFN signal) and supplies the signal to a D/A (Digital to Analog) converter 38.

The address data detected from the address detector 36 is applied to an input port $Pt_2$ of the microprocessor 22. If the address data is the aforementioned TOC data reproduced from the disc 26 during the reproduction of the lead-in area of the disc 26, the microprocessor 22 stores the TOC data in a RAM (Random Access Memory) 40 so that the TOC data is used to perform the control function necessary for making a search operation. However, if the address data detected from the address detector 36 is the data reproduced from the disc 26 during the reproduction of the program area of the disc 26, the microprocessor 22 transmits the address data to a display unit 42.

The reproduced digital data reset in the form of an analogue signal by the D/A converter 38 is subjected to the necessary error correction and memory interleaving and used to drive and sound a loudspeaker 44.

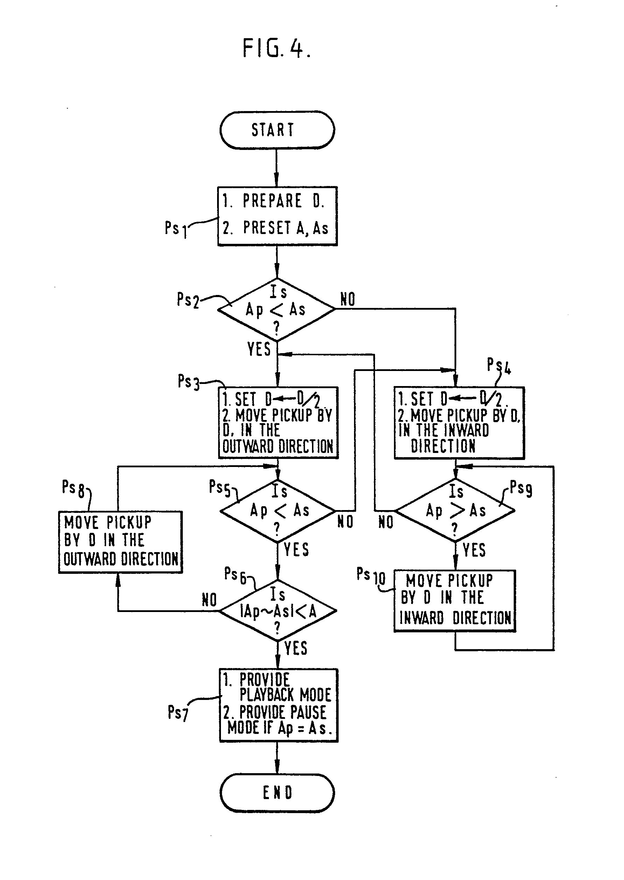

The microprocessor 22 is so arranged that it is driven by a prescribed operation program stored in a ROM (Read Only Memory) 46. For instance, when the fast-forward operation key 16 is operated with the operation program of the ROM 46, the microprocessor 22 generates a three-states kick pulse KPa consisting of positive and negative pulses at the fore and rear parts thereof as shown in Fig. 3 and sends the kick pulse KPa to a pick-up carriage motor 48 from another output port $Pt_3$ thereof. The kick pulse KPa is applied to the pick-up carriage motor 48 through an output control circuit 50 which is described in detail later. Accordingly, the pick-up 28 is moved in an outward direction relative to the disc 26 at high speed while the positive pulse of the kick pulse KPa is applied through the output control circuit 50 and then the energizing force for the pick-up 28 is attenuated while the negative pulse of the kick pulse KPa is applied. As a result, a laser beam of the pick-up 28 is made to move at high speed in the outward direction relative to the disc 26 whenever the kick pulse KPa is supplied and the record disc reproducing system 10 is caused to carry out the fast-forward operation.

On the other hand, when the fast-reverse operation key 18 is operated, the microprocessor 22 supplies another three states kick pulse KPb consisting of negative and positive pulses at the fore and rear parts thereof as shown in Fig. 3, opposite to the kick pulse KPa, from the output port $Pt_3$ to the pick-up carriage motor 48 through the output control circuit 50. Consequently, the laser beam of the pick-up 28 is moved in an inward direction relative to the disc 26 whenever the kick pulse KPb is outputted, so that the record disc reproducing system 10 carries out the fast-reverse operation.

Moreover, when the stop operation key 14 is operated, the microprocessor 22 stops the pick-up carriage motor 48 to carry the pick-up 28 by a stop signal generated from an output port $Pt_4$ of the microprocessor 22. The microprocessor 22 also stops the disc drive motor 24 to rotate the disc 26 so as to bring the record disc reproducing system 10 to a standstill, thus making the disc 26 attachable and detachable to and from the apparatus.

When the playback operation key 12 is operated, the microprocessor 22 first places the record disc reproducing system 10 in a playback state and presents a reference address generator 52 connected to an output port $Pt_5$ thereof with an address obtainable by the address detector 36 (hereinafter called a reproduction address). The reference address generator 52 comprises, for instance, a presettable counter and an oscillator, to generate a reference address which is equivalent to the reproduction address but which is generated independently of the reproduction address after the preset of the reference address generator 52. The reference address generated from the reference address generator 52 is applied to one of the inputs of an address comparator 54 comprising a conventional digital comparator while the reproduction address from the address detector 36 is applied to another input of the address comparator 54.

The address comparator 54 is so arranged to compare the reproduction address from the address detector 36 with the reference address from the reference address generator 52 and then generates a compared result signal varying in correspondence with the difference between the reproduction address and the reference address. The compared result signal is applied to another input port $Pt_6$ of the microprocessor 22. The microprocessor 22 generates at the output port $Pt_3$ the kick pulse KPa or KPb in accordance with the polarity of the compared result signal applied to the input port $Pt_6$. That is, for instance, the address comparator 54 produces a positive signal when the reproduction address from the address detector 36 is smaller than the reference address from the reference address generator 52, whereas the address comparator 54 produces a negative signal when the reproduction address is larger than the reference address. The microprocessor 22 generates the kick pulse KPa or KPb in accordance with the positive or the negative compared result signal.

The kick pulse KPa or KPb generated in the playback operation has a pulse width shorter than that generated in the search operation. On the other hand, the output control circuit 50 is so arranged to distinguish the pulse width of the kick pulse KPa or KPb being longer or shorter than the prescribed value and deliver the kick pulse KPa or KPb to the pick-up carriage motor 48 or the pick-up 28, according to the pulse width of the kick pulse PKa or PKb being longer or shorter than the prescribed value. Thus, the kick pulse PKa or PKb generated in the search operation and having relatively long pulse width is controlled to be applied to the pick-up carriage motor 48 by the output control circuit 50, whereas the kick pulse KPa or KPb generated in the playback operation and having relatively short pulse width is controlled to be applied to the pick-up 28. The positive or negative pulse at the fore part of the kick pulse KPa or KPb applied to the pick-up 28 drives a tracking actuator (not shown) in the pick-up 28 so that the laser beam moves in an outward or inward direction relative to the disc 26 for the pulse width of the positive or negative forepart pulse. During the application of the forepart pulse of the kick pulse KPa or KPb to the tracking actuator, the servo-circuit 32 drives the pick-up carriage motor 48 in an outward or inward direction relative to the disc 26 according to the tracking error signal caused by the movement of the tracking actuator so as to compensate the tracking error.

The rearpart pulse of the kick pulse KPa or KPb is set to have a pulse width of a half of the forepart pulse by the microprocessor 22 so that the rearpart pulse drives the tracking actuator to be quickly restored without overdriving the tracking actuator in the opposite direction.

Further, the kick pulse KPa or KPb is controlled as regards its pulse width in accordance with the compared result signal, in other words in accordance with the difference between the reproduction address and the reference address. When the difference between the reproduction and reference addresses corresponds to an address value indicating one or two or three tracks' divergence, etc., the microprocessor 22 generates the kick pulse KPa or KPb with one or two or three unit lengths of pulse width, etc. Therefore, the pick-up 28 jumps on the different track of the disc 26 apart from the present tracing track by one or two or three tracks, etc., according to the respective pulse width of the kick pulse KPa or KPb.

Referring now to Fig. 4, a search function will be described. The search function mode is set by the operation of the search operation key 20 in company with the designation or the preset of a suitable code or number corresponding to a desired program location to be searched.

When the search operation key 20 is operated, the microprocessor 22 carries out the step $Ps_1$. In the step $Ps_1$, the microprocessor 22 prepares a value D of about the distance between the search starting point and the location of the desired program, and sets a variable to represent the value D. Then, the microprocessor 22 carries out the step $Ps_2$. In the step $Ps_2$, the microprocessor 22 checks whether the reproduction address Ap reproduced by the pick-up 28 at the starting point and applied to the input port $Pt_3$ of the microprocessor 22 is smaller than the TOC address As of the desired program location. The checked result in the step $Ps_2$, YES (right) or NO (wrong), means that the pick-up 28 is located at an inward position or an outward position relative to the location of the desired program. In the case of the checked result being YES, the microprocessor 22 carries out the step $Ps_3$, otherwise the microprocessor carries out the step $Ps_4$. In the step $Ps_3$, the microprocessor 22 operates a calculation of [D=D/2] for the variable and applies the kick pulse KPa to the pick-up carriage motor 48 to make the pick-up 28 move at the high speed in the outward direction relative to the disc 26 by a distance according to the variable newly set. In the step $Ps_4$ the microprocessor 22 also operates the calculation of [D=D/2] for the variable but applies the kick pulse KPb to the pick-up carriage motor 48 to make the pick-up 28 move at the high speed in the inward direction relative to the disc 26 by a distance according to the variable newly set.

A pulse width T for the kick pulse KPa or KPb is selected from various pulse widths prepared in the microprocessor 22 and stored in the RAM 40 in the form of a table as described later for the pick-up carriage motor 48 so the pick-up 28 moves at a high speed to a position determined by the variable. That is, the pulse width T of the kick pulse KPa or KPb is selected from, for example, the following table:

| Pulse width T | Track numbers moved | Program time (sec.) |
|---|---|---|
| $T_1$ | 1 | 0.12—0.33 |
| $T_2$ | 3 | 0.4—1 |
| $T_3$ | 5 | 0.6—1.7 |
| $T_4$ | 7 | 1—2.3 |
| $T_5$ | 15 | 2—5 |
| $T_6$ | 31 | 4—11 |
| $T_7$ | 64 | 8—21 |
| $T_8$ | 128 | 16—43 |
| $T_9$ | 256 | 32—85 |

Leftside figures of the *Program Time* in the Table are those for the most inside portion of the program area, while rightside figures are those for the most outward portion of the program area. The microprocessor 22 selects a suitable pulse width T and applies the kick pulse KPa or KPb with the pulse width T to the pick-up carriage motor 48 to make the pick-up 28 move the distance corresponding to the data set to the variable. In case of the pick-up 28 being apart very far from the desired program portion, in other words the data set to the variable being very large, the microprocessor 22 applied the kick pulse KPa or KPb with the pulse width $T_9$ several times to the pick-up carriage motor 48.

The microprocessor 22 carries out the step $Ps_5$ after the step $Ps_3$. In the step $Ps_5$, the microprocessor 22 checks again whether the reproduction address Ap newly reproduced is smaller than the TOC address As. The checked result in the step $Ps_2$, YES (right) or NO (wrong), also means that the pick-up 28 is located at an inward position or an outward position relative to the location of the desired program. In case of the checked result being YES, the microprocessor 22 carries out the step $Ps_6$, otherwise the microprocessor goes to the aforementioned step $Ps_4$. In the step $Ps_6$, the microprocessor 22 finds a difference between the TOC address As and the reproduction address Ap and checks whether the difference is smaller than the prescribed value A previously set in the microprocessor 22. The checked result in the step $Ps_6$, YES or NO, means that the pick-up 28 is near to the desired program or still further from it. In case of the checked result at the step $Ps_6$ being YES, the microprocessor 22 thus carries out the step $Ps_7$, otherwise the microprocessor 22 carries out the step $Ps_8$. In the step $Ps_7$, the microprocessor 22 places the disc reproducing system 10 in the playback operation mode and then in the pause mode when the reproduction address Ap has conformed to the TOC address in the playback operation. In the step $Ps_8$, the microprocessor 22 again applies the kick pulse KPa to the pick-up carriage motor 48 to make the pick-up 28 move at the high speed in the outward direction relative to the disc 26 by the same distance set in the step $Ps_3$. After the step $Ps_8$, the microprocessor 22 returns to the step $Ps_5$.

The microprocessor 22 carries out the step $Ps_9$ after the step $Ps_4$. In the step $Ps_9$, the microprocessor 22 checks whether the reproduction address Ap newly reproduced is larger than the TOC address As. The checked result in the step $Ps_9$, YES or NO, also means that the pick-up 28 is located at an outward position or an inward position relative to the location of the desired program. In case of the checked result being YES, the microprocessor 22 goes to the step $Ps_{10}$ and then returns to the step $Ps_9$ again, otherwise the microprocessor 22 returns to the aforementioned step $Ps_3$. In the step $Ps_{10}$, the microprocessor 22 again applies the kick pulse KPb to the pick-up carriage motor 48 to make the pick-up 28 move at the high speed in the inward direction relative to the disc 26 by the same distance set in the step $Ps_4$.

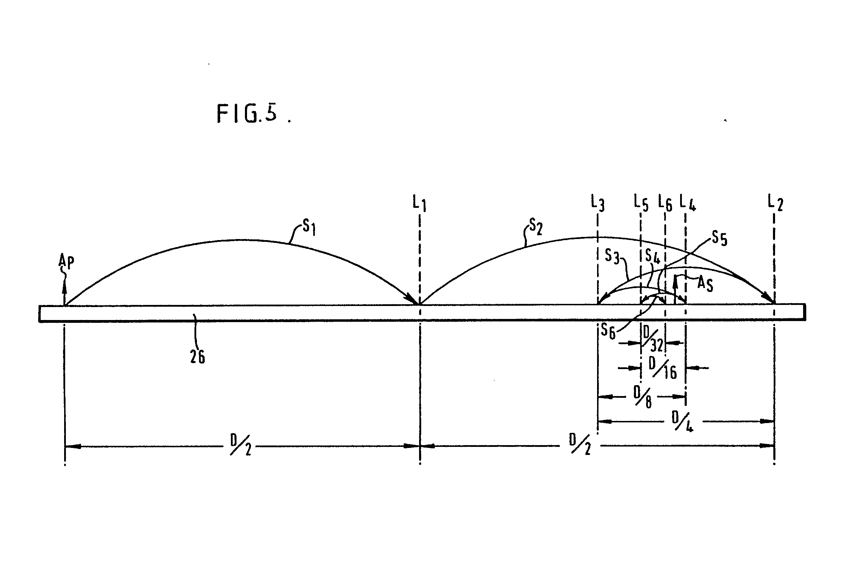

Referring now to Figs. 4 and 5, there will be described one example of the search operation for a desired program. In this example, it is supposed that the desired program is located at the position as shown by As in Fig. 5 and the pick-up 28 is originally located at the position as shown by Ap in Fig. 5.

When the search operation has started, the microprocessor 22 carries out the step $Ps_1$. In the step $Ps_1$, the microprocessor 22 prepares a value D of about the distance between the search starting point Ap and the location As of the desired program, and sets a variable to represent the value D. Then, the microprocessor 22 carries out the step $Ps_2$. After the process $Ps_2$, the microprocessor 22 goes to the step $Ps_3$, because the reproduced address Ap at the search operation starting position is smaller than the TOC address As of the desired program. The microprocessor 22 thus makes the pick-up 28 move by a distance D/2 as shown by the move $S_1$ in Fig. 5 according to the step $Ps_3$.

With the pick-up 28 at the location $L_1$, the microprocessor 22 carries out the step $Ps_5$ to check whether the reproduction address Ap newly reproduced by the pick-up 28 at the location $L_1$ being smaller than the TOC address As, the microprocessor goes to the step $Ps_6$ to check whether the difference between the TOC address As and the reproduction address Ap at the location $L_1$ is smaller than the prescribed value A previously set in the microprocessor 22. Because of the difference being larger than the prescribed value, the microprocessor 22 goes to the step $Ps_8$. According to the step $Ps_8$, the microprocessor 22 makes the pick-up 28 move by the distance D/2 in the outward direction relative to the disc 26 as shown by the move $S_2$ in Fig. 5.

With the pick-up at the location $L_2$, the microprocessor 22 again carries out the step $Ps_5$ to check whether the reproduction address Ap newly reproduced by the pick-up 28 at the location $L_2$ is smaller than the TOC address As of the desired program location. Because of the reproduction address Ap at the location $L_2$ being larger than the TOC address As, the microprocessor goes to the step $Ps_4$. According to the step $Ps_4$, the microprocessor 22 makes the pick-up 28 move by the distance D/4 in the inward direction relative to the disc 26 as shown by the move $S_3$ in Fig. 5.

With the pick-up 28 at the location $L_3$, the microprocessor 22 carries out the step $Ps_9$ to check whether the reproduction address Ap newly reproduced by the pick-up 28 at the location $L_3$ is larger than the TOC address As of the desired program location. Because of the reproduction address Ap at the location $L_3$ being smaller than the TOC address As, the microprocessor goes to the step $Ps_3$. The microprocessor 22 thus makes the pick-up 28 move by a distance D/8 as shown by the move $S_4$ in Fig. 5 according to the step $Ps_3$.

With the pick-up 28 at the location $L_4$, the microprocessor 22 carries out the step $Ps_5$ to check whether the reproduction address Ap newly reproduced by the pick-up 28 at the location $L_4$ is smaller than the TOC address As of the desired program location. Because of the reproduction address Ap at the location $L_4$ being larger than the TOC address As, the microprocessor again goes to the step $Ps_4$. According to the step $Ps_4$, the microprocessor 22 makes the pick-up 28 move by the distance D/16 in the inward direction relative to the disc 26 as shown by the move $S_5$ in Fig. 5.

With the pick-up 28 at the location $L_5$, the microprocessor 22 carries out the step $Ps_9$ to check whether the reproduction address Ap newly reproduced by the pick-up 28 at the location $L_5$ is larger than the TOC address As of the desired program location. Because of the reproduction address Ap at the location $L_5$ being smaller than the TOC address As, the microprocessor again goes to the step $Ps_3$. The microprocessor 22 thus makes the pick-up 28 move by a distance D/32 as shown the move $S_6$ in Fig. 5 according to the step $Ps_3$.

With the pick-up 28 at the location $L_6$, the microprocessor 22 carries out the step $Ps_5$ to check whether the reproduction address Ap newly reproduced by the pick-up 28 at the location $L_6$ is smaller than the TOC address As of the desired program location. Because of the reproduction address Ap at the location $L_6$ being smaller than the TOC address As, the microprocessor goes to the step $Ps_6$ to check whether the difference between the TOC address As and the reproduction address Ap at the location $L_6$ is smaller than the prescribed value A previously set in the microprocessor 22.

Here it is supposed that the microprocessor 22 has detected the difference being smaller than the prescribed value. Therefore, the microprocessor 22 goes to the step $Ps_7$. In the step $Ps_7$, the microprocessor 22 places the disc reproducing system 10 in the playback operation mode and then in the pause mode (in which the pick-up carriage motor 48 is stopped) to complete a series of search operations, until the reproduction address Ap has conformed to the TOC address in the playback operation.

Thus, the record disc reproducing apparatus is capable of making a search operation for a desired program by reducing the number of search steps and consequently the length of time required for the search operation as much as possible, thus offering excellent operability.

The kick pulse KPa or KPb is applied to the actuator coil of the pick-up 28 through the output control circuit 50, when the distance between the pick-up 28 and the desired program, or the difference between the reproduction address Ap newly reproduced and the TOC address As decreases below the prescribed value.

In a modification, on beginning of the search operation, the pick-up 28 is necessarily located on the innermost track of the program area of the disc 26, according to the prescribed operation program in the microprocessor 22. Accordingly, the step $Ps_3$ of Fig. 4 may be eliminated because the reproduction address Ap at the innermost track of the program area is absolutely smaller than the TOC address As of the desired program. Further, as dimensions of the program areas are provided in the CD (Compact Disc) format, the distance D/2 the pick-up 28 is to be moved according to the step $Ps_3$ may always fixed to the predetermined value, that is, to the value of the centre of the program area. Thus, the step $Ps_1$ of Fig. 4 becomes needless and the other steps $Ps_3$, $Ps_4$, $Ps_8$ and $Ps_{10}$ become simple.

In the embodiment or the modification, it is a matter of course that the kick pulse KPa and or KPb may be always applied to the actuator coil of the pick-up 28 directly, instead of being applied to the pick-up carriage motor 48. Thus, the output control circuit 50 becomes needless. In the arrangement, the pick-up carriage motor 48 may also carry the pick-up 28 at the high speed through the servo function of the servo-circuit 32 (see Fig. 2).

**Claims**

1. Record disc reproducing apparatus for use in reproducing data stored on the disc, comprising:—
a) a pick-up (28) for reading data and the address (Ap) of such data from said disc;
b) means (48) for moving said pick-up in a radial direction with respect to said disc; and
c) processing means (22) arranged for: comparing the address Ap of data read from said disc with the address As stored in memory means of (40) preselected data on said disc; and generating drive signals which cause the pick-up to be positioned substantially at the address of said preselected data as a result of an oscillating movement with decreasing amplitudes, characterised in that the processing means provides data representative of a nominal distance value D for the distance between the address Ap read initially from said disc and the address As; in a first step replaces the current value of D by a replacement value of $D \cdot n$, where n<1; and, in a second step, uses the replacement value to produce a pulse (KPa or KPb) having parameters dependent on the replacement value and which of Ap and As is larger, the pulse being applied to the pick-up moving means to cause the pick-up to move by the replacement value in a direction dependent on which of Ap and As is larger, the processing means repeating said first and second steps until (Ap−As)<A, where A is a prescribed value.

2. Apparatus according to claim 1, characterised in that n=1/2.

3. Apparatus according to claim 1 or 2, characterised in that said replacement value $D \cdot n$ is not replaced by a new replacement value if, as a result of the preceding first and second steps, the sign of (Ap−As) has not changed.

4. Apparatus according to any preceding claim, characterised in that said nominal distance value D is about the distance between the address Ap read initially from said disc (26) and the address As.

5. Apparatus according to any of claims 1 to 3, characterised in that said nominal distance value D is about a radial breadth of a program area of the disc (26).

6. Apparatus according to any preceding claim, characterised in that each such pulse (KPa or KPb) has a length and a polarity dependent respectively on the distance and direction the pick-up (28) is to be moved.

**Patentansprüche**

1. Wiedergabegerät für eine Aufnahmeplatte zur Verwendung beim Wiedergeben von Daten, die auf der Aufnahmeplatte gespeichert sind, mit

a) einem Abtaster (28) zum Auslesen von Daten und der Adresse Ap solcher Daten aus der Aufnahmeplatte,

b) einem Mittel (48) zum Bewegen des Abtasters in radialer Richtung in bezug auf die Aufnahmeplatte und

c) einem Prozessor (22), der dazu bestimmt ist, die Adresse Ap der Daten, die aus der Aufnahmeplatte ausgelesen werden, mit der in einem Speicher (40) gespeicherten Adresse As vorausgewählter Daten auf der Aufnahmeplatte zu vergleichen, und Treibersignale zu erzeugen, die bewirken, daß der Abtaster im wesentlichen bei der Adresse für die vorausgewählten Daten als Ergebnis einer schwingenden Bewegung mit sich abschwächenden Amplituden positioniert wird,
dadurch gekennzeichnet,

— daß der Prozessor Daten bereitstellt, die repräsentativ für einen Nominalabstandswert D für den Abstand zwischen der Adresse Ap, welche anfänglich aus der Aufnahmeplatte ausgelesen wurde, und der Adresse As ist,
— daß in einem ersten Schritt der augenblickliche Wert D durch einen Ersatzwert $D \cdot n$ ersetzt wird, wobei $n < 1$ ist,
— daß in einem zweiten Schritt der Ersatzwert verwendet wird, um einen impuls (KPa oder KPb) zu erzeugen, der Parameter aufweist, die von dem Ersatzwert und davon, welche Adresse, nämlich Ap oder As, größer ist, abhängig sind,
— daß der Impuls dem Mittel zum Bewegen des Abtasters zugeführt wird, um zu bewirken, daß sich der Abtaster um den Ersatzwert in einer Richtung bewegt, die davon abhängt, welche Adresse, nämlich Ap oder As, größer ist, und
— daß der Prozessor den ersten und den zweiten Schritt wiederholt, bis $(Ap-As) < A$ ist, wobei A ein vorgegebener Wert ist.

2. Wiedergabegerät nach Anspruch 1, dadurch gekennzeichnet, daß $n = 1/2$ ist.

3. Wiedergabegerät nach Anspruch 1 oder 2, dadurch gekennzeichnet, daß der Ersatzwert $D \cdot n$ nicht durch einen neuen Ersatzwert ersetzt wird, falls sich das Vorzeichen von $(Ap-As)$ nicht als Ergebnis des ersten und des zweiten Schritts geändert hat.

4. Wiedergabegerät nach einem der vorhergehenden Ansprüche, dadurch gekennzeichnet, daß der Nominalabstandswert D etwa der Abstand zwischen der Adresse Ap, die anfänglich aus der Wiedergabeplatte (26) ausgelesen wurde, und der Adresse As ist.

5. Wiedergabegerät nach einem der Ansprüche 1 bis 3, dadurch gekennzeichnet, daß der Nominalabstandswert D etwa eine radiale Breite eines Programmbereichs der Aufnahmeplatte (26) ist.

6. Wiedergabegerät nach einem der vorhergehenden Ansprüche, dadurch gekennzeichnet, daß jeder der Impulse (KPa oder KPb) eine Länge und eine Polarität hat, die von der Weglänge bzw. der Richtung abhängen, über die bzw. in der der Abtaster (28) zu bewegen ist.

**Revendications**

1. Appareil de lecture de disque d'enregistrement utilisable dans la reproduction de données stockées sur le disque, comprenant:

a) un dispositif de lecture (28) pour lire les données et l'adresse (Ap) de telles données à partir dudit disque;

b) des moyens (48) pour déplacer ledit dispositif de lecture dans une direction radiale par rapport audit disque; et

c) des moyens de traitement (22) prévus pour:

comparer l'adresse Ap des données lues à partir dudit disque avec l'adresse As stockée dans des moyens à mémoire (40) des données pré-sélectionnées dudit disque; et former des signaux d'entraînement qui amènent le dispositif de lecture à se placer sensiblement à l'adresse desdites données pré-selectionnées à la suite d'un mouvement oscillant d'amplitudes décroissantes, caractérisé en ce que les moyens de traitement fournissent des données représentatives d'une valeur de distance nominale D pour la distance entre l'adresse Ap lue initialement à partir dudit disque et l'adresse As; dans une première opération remplacent la valeur actuelle de D par une valeur substituée de $D \cdot n$, où $n < 1$; et, dans une seconde opération, utilisent la valeur substituée pour produire une impulsion (KPa ou KPb) ayant des paramètres dépendant de la valeur substituée et de celle parmi Ap et As qui est la plus grande, l'impulsion étant appliquée aux moyens de déplacement du dispositif de lecture pour amener le dispositif de lecture à se déplacer de la valeur substituée dans une direction dépendant de celle parmi Ap et As qui est la plus grande, les moyens de traitement répétant lesdites première et seconde opérations jusqu'à $(Ap-As) < A$, où A est une valeur donnée.

2. Appareil selon la revendication 1, caractérisé en ce que $n = 1/2$.

3. Appareil selon la revendication 1 ou 2, caractérisé en ce que ladite valeur substituée D · n n'est pas remplacée par une nouvelle valeur substituée si, à la suite des précédentes première et seconde opérations, le signe de (Ap−As) n'a pa changé.

4. Appareil selon une revendication précédente quelconque, caractérisé en ce que ladite valeur de distance nominale D est environ la distance entre l'adresse Ap lue initialement à partir dudit disque (26) et l'adresse As.

5. Appareil selon l'une quelconque des revendications 1 à 3, caractérisé en ce que ladite valeur de distance nominale D est environ une largeur radiale d'une zone de programme du disque (26).

6. Appareil selon une revendication précédente quelconque, caractérisé en ce que chaque impulsion de ce type (KPa ou KPb) présente une longueur et une polarité dépendant respectivement de la distance et de la direction dont doit être déplacé le dispositif de lecture (28).

# FIG.1.

| S₀ | S₁ | CNT | ADR | MNR | X | MIN | SEC | FRAME | ZERO | AMIN | ASEC | AFRAME | CRC |
|----|----|-----|-----|-----|---|-----|-----|-------|------|------|------|--------|-----|

# FIG. 2

0 114 508

## FIG. 4.

```
        ┌──────────────┐
        │    START     │
        └──────┬───────┘
               │
        ┌──────▼───────┐
Ps1 ──  │ 1. PREPARE D. │
        │ 2. PRESET A, As│
        └──────┬───────┘
               │
Ps2 ──      ◇ Is          NO
            Ap < As  ──────────────┐
               ?                    │
            │ YES                   │
            ▼                       ▼
Ps3         ┌──────────────┐   ┌──────────────┐ Ps4
            │1. SET D ← D/2│   │1. SET D ← D/2│
            │2. MOVE PICKUP│   │2. MOVE PICKUP│
            │  BY D, IN THE│   │  BY D, IN THE│
            │  OUTWARD     │   │  INWARD      │
            │  DIRECTION   │   │  DIRECTION   │
            └──────┬───────┘   └──────┬───────┘
                   │                  │
Ps8              Ps5 ◇ Is        NO   NO  ◇ Is       Psg
┌──────────┐        Ap < As  ──────┐ ──── Ap > As
│MOVE PICKUP│          ?             │       ?
│BY D IN THE│        │ YES                 │ YES
│OUTWARD    │        ▼                     ▼
│DIRECTION  │   Ps6 ◇ Is            Ps10 ┌──────────┐
└──────────┘     NO  |Ap~As|<A           │MOVE PICKUP│
                   ?                      │BY D IN THE│
                 │ YES                    │INWARD     │
                 ▼                        │DIRECTION  │
Ps7        ┌──────────────┐               └──────────┘
           │1. PROVIDE     │
           │  PLAYBACK MODE│
           │2. PROVIDE PAUSE│
           │  MODE IF Ap=As.│
           └──────┬───────┘
                  │
           ┌──────▼───────┐
           │     END      │
           └──────────────┘
```

FIG.5 .